(19) Europäisches Patentamt
European Patent Office
Office européen des brevets

(11) Publication number: **0 032 060**
**B1**

(12) # EUROPEAN PATENT SPECIFICATION

(45) Date of publication of patent specification: **24.10.84**

(51) Int. Cl.$^3$: **C 08 L 61/06,** C 08 L 101/00, C 08 L 63/00, C 08 G 8/04

(21) Application number: **80304743.0**

(22) Date of filing: **29.12.80**

(54) **Novolak resin composition and products formed therefrom.**

(30) Priority: **27.12.79 JP 169140/79**
**03.06.80 JP 73754/80**
**03.06.80 JP 73755/80**
**03.06.80 JP 73756/80**
**03.06.80 JP 73757/80**

(43) Date of publication of application:
**15.07.81 Bulletin 81/28**

(45) Publication of the grant of the patent:
**24.10.84 Bulletin 84/43**

(84) Designated Contracting States:
**DE FR GB IT**

(56) References cited:
**DE-A-2 616 992**
**FR-A-2 279 782**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Takeda, Nobuyuki**
**49-8, 2-chome Ozu-cho**
**Iwakuni-shi Yamaguchi-ken (JP)**
Inventor: **Iwata, Tadao**
**2-9, 1-chome Muronoki-cho**
**Iwakuni-shi Yamaguchi-ken (JP)**

(74) Representative: **Myerscough, Philip Boyd**
**J.A.Kemp & Co. 14, South Square Gray's Inn**
**London, WC1R 5EU (GB)**

**EP 0 032 060 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a resin composition comprising a setting resin and a novolak phenolic resin.

Setting resins such as epoxy, urethane, urea, melamine and phenolic resins are ordinarily used in the form of compositions formed by adding curing agents and, if necessary, inorganic fillers to these setting resins. These resin compositions are used for the manufacture of various moulded articles through moulding and curing. Although cured products of these compositions are excellent in their mechanical properties at relatively low temperatures approximating to normal temperatures, they possess inferior heat resistance and mechanical characteristics, such as thermal distortion resistance, flexural strength, mechanical strength and dimension stability, at thermal distortion temparatures and high temperatures. Therefore, these compositions cannot be utilized for the manufacture of moulded articles to be used under heating conditions.

As means for improving the heat resistance, mechanical characteristics and other properties of these setting resin compositions, there have been proposed various setting resin compositions formed by incorporating resol phenolic resins or novolak phenolic resins into setting resins. For example, setting resin compositions comprising an epoxy resin as the setting type resin and a novolak phenolic resin incorporated therein are proposed in Japanese Patent Publications Nos. 9246/57, 11827/63, 3574/64, 27769/64, 1352/66, 30351/70, 38030/71, 8278/73, 44958/73, 19319/75, 20537/76, 21679/76, 21839/76, 24399/76, 43403/76, 3828/77 and 9480/77, and Japanese Patent Application Laid-Open Specifications Nos. 72293/73, 118797/74, 118798/74, 70497/75, 108400/75, 132267/76, 138599/77, 144099/77 and 29532/78. Novolak phenolic resins incorporated in these known epoxy resin compositions are prepared by conventional methods and their number average molecular weights are relatively low, for example, ordinarily lower than 1000 and about 1200 at the highest. Even if these novolak phenolic resins having a relatively low molecular weight are incorporated into epoxy resins, it is impossible to sufficiently improve heat resistance and mechanical characteristics at heat distortion temperatures and high temperatures, such as heat distortion resistance, flexural strength, mechanical strength and dimension stability, in the resulting epoxy resin compositions. Furthermore, even if such novolak phenolic resins having a relatively low molecular weight are incorporated into setting resins other than epoxy resins, for example urethane, urea, melamine and phenolic resins, it is impossible to sufficiently improve the heat resistance and mechanical characteristics in the resulting setting resin compositions.

It has now been discovered that the problems of heat resistance and mechanical characteristics of setting resin compositions can be overcome by using a substantially linear, high-molecular-weight novolak substituted phenolic resin having a number average molecular weight, $\bar{M}n$, of at least 1500. Accordingly, the present invention prodivdes a resin composition comprising (A) a setting resin and (B) from 10 to 200 parts by weight, per 100 parts by weight of resin (A), of a substantially linear, high-molecular-weight novolak substituted phenolic resin which is derived from a phenol component mainly composed of at least one bifunctional phenol and which has a number average molecular weight of at least 1500. Preferably 70 to 100 mole%, more preferably 80 to 100 mole %, especially preferably 90 to 100 mole %, of the phenol component is a bifunctional phenol.

It is thus possible for the resin compositions of the present invention to exhibit greatly improved properties compared with resin compositions comprising an ordinary novolak type phenolic resin having a relatively low molecular weight, such as proposed in the above-mentioned literature references, in terms of heat resistance and mechanical characteristics such as heat distortion resistance, flexural strength, mechanical strength and dimensional stability, at heat distortion temperatures and high temperatures.

The setting resin (A) incorporated in the resin composition of the present invention may be a resin which is cured by a curing agent and, if necessary, a curing promotor or a resin which is cured by the action of heat. More specifically, the setting resin may be selected from various epoxy resins, various urethane resins, urea resins, melamine resins, polybismaleimide resins, ordinary novolak phenolic resins and ordinary resol phenolic resins. Among these setting resins (A), those capable of being cured by a phenolic hydroxyl group-containing compound are especially preferred because the heat resistance and mechanical characteristics are particularly improved in the resulting compositions. More specifically, it is preferred that an epoxy resin, a urethane resin, an ordinary novolak phenolic resin or an ordinary reson phenolic resin be used as the setting resin (A), because the heat resistance and mechanical characteristics are especially prominently improved in the resulting resin compositions. The greatest improvements can be attained when an epoxy resin is used. Therefore, it is most preferred than an epoxy resin be used as the setting resin (A).

In the case where the setting resin (A) is an epoxy resin, the epoxy resin used in a compound containing at least 2 epoxy groups per molecule. Such epoxy resins include, for example, epoxy resins of glycidyl ethers of polyphenol compounds such as bisphenol A, bisphenol F and 1,1,2,2-tetra-kis(4-hydroxyphenyl)ethane; epoxy resins of glycidyl ethers of nuclear hydration products of the above-mentioned polyphenol compounds; epoxy resins of glycidyl ethers of polyhydric phenols such as catechol, resorcinol, hydroquinone and phloroglucinol; epoxy resins of glycidyl ethers of polyhydric

alcohols such as ethylene glycol, butanediol, glycerol, erythritol and polyoxyalkylene glycol; novolak epoxy resins; alicyclic epoxy resins such as vinylcyclohexene dioxide, limonene dioxide and dicyclophentadiene dioxide; epoxy resins of polyglycidyl esters of condensates of polycarboxylic acids such as phthalic acid and cyclohexane-1,2-dicarboxylic acid; polyglycidyl amine epoxy resins; and methylepichlorohydrin epoxy resins. Among these epoxy resins, an epoxy resin of a glycidyl ether of a polyphenol compound and a novolak epoxy resin are preferred. An epoxy resin of a glycidyl ether of bisphenol A or bisphenol F is especially preferred.

Al the compounds known as curing agents for epoxy resins can be incorporated into a resin composition of the invention containing an epoxy resin. For example, linear aliphatic polyamines such as diethylene triamine, triethylene tetramine, tetraethylene pentamine, dipropylene diamine and diethylaminopropylamine; cyclic aliphatic polyamines; aliphatic polyamine adducts; ketoimines, modified aliphatic polyamines; polyamide-amines; aromatic amines; aromatic modified amines; aromatic modified polyamines; tertiary amine curing agents; mercaptan curing agents; acid anhydride curing agents; copolymers containing an acid anhydride group, such as an ethylene/maleic anhydride copolymer; compounds containing a phenolic hydroxyl group, such as novolak or epoxy phenolic resin precondensates; and compounds such as dicyandiamide and melamine, can be employed as curing agents.

When the setting resin (A) incorporated in a resin composition of the present invention is a urethane resin, a resin having a urethane linkage formed from a polyisocyanate and a polyether polyol, polyester polyol or other polyol compound, or a resin having a urethane linkage formed from a urethane prepolymer and a curing agent can be used.

The polyisocyanate can be, for example, hexamethylene diisocyanate, xylylene diisocyante, 1-methyl-2,4-diisocyanate, cyclohexane phenylene diisocyanate, tolylene diisocyanate, chlorophenylene diisocyanate, diphenylmethane-4,4′-diisocyanate, naphthalene-1,5-diisocyanate, triphenylmethane-4,4′,4″-triisocyanate, xylylene-2,2′-diisocyanate, isopropylbenzene-2,4-diisocyanate, an adduct of 1 mole of trimethylolpropane and 3 moles of tolylene diisocyanate, or high-molecular-weight polyisocyanates obtained by polymerization of the foregoing polyisocyanates.

The polyol is a compound having at least 2 hydroxyl groups per molecule. Such hydroxyl group-containing compounds include, for example, polyether polyols such as polyethylene glycol, polyoxypropylene glycol and poly(oxyethylene/oxypropylene) glycol; hydrolysis products of copolymers of $\alpha$-olefins with organic carboxylic acid unsaturated esters; polyester type polyols having terminal hydroxyl groups, which are prepared from polybasic acids and glycols; acrylic polyols, castor oil-derived polyols and tall oil-derived polyols; polybutadiene, polystyrene and butadiene/acrylonitrile copolymers having hydroxyl groups at both ends of the molecule; hydroxyl group-containing epoxy resins; modified hydroxyl group-containing epoxy resins; and hydroxyl group-containing compounds formed by reacting a polyisocyanate with an excess of a polyol compound.

The urethane prepolymer is a compound having at least 2 isocyanate groups per molecule, which is obtained by reacting a polyol with an excess of a polyisocyanate.

The curing agent can be a curing agent customarily used for urethane prepolymers. More specifically, polymines such as ethylene diamine, diethylene triamine, triethylene tetramine, tetraethylene pentamine, propylene diamine, tetramethylene diamine, and mixtures of two or more of the foregoing polyamines can be employed. Furthermore, the polyol can be used singly or in the form of a mixture of two or more when preparing the urethane prepolymer.

The novolak resin (B) is a substantially linear, high-molecular-weight novolak substitued phenolic resin which has a phenol component comprised mainly of a bifunctional phenol and which has a number average molecular weight $\overline{M}n$ of at least 1500 as determined according to the vapour pressure osmotic method in N,N-dimethylacetamide as the solvent. This resin is hereinafter referred to as a "high-molecular-weight novolak resin".

The high-molecular-weight novolak resin may comprise novolak recurring units, all of which are substantially linear, or it may contain intervening or bridging groups consisting of a divalent hydrocarbon group, which appear between blocks of novolak recuring units having a number average molecular weight of 250 to 1200, in an amount of 0.5 to 1 mole, especially 0.66 to 1 mole, per mole of said blocks. What is important is that the high molecular-weight novolak resin is substantially linear and has a number average molecular weight of at least 1500, preferably 1700 to 15000, especially preferably 2000 to 10000. By the term "substantially linear" is meant that the molecular structure of the polymer is a linear structure including straight or branched chains but is substantially free of crosslinkages (gelled portions).

The number average molecular weight of the high-molecular-weight novolak resin (B) is determined according to the vapour pressure osmotic method in N,N-dimethylacetamide as the solvent. The number average molecular weight thus determined must be at least 1500. As the number average molecular weight of the high-molecular-weight novolak resin is increased, when this resin is combined with the setting resin (A), preferred resin compositions are obtained possessing greatly improved heat resistance and mechanical characteristics.

The molecular weight distribution of the high-molecular-weight novolak resin used in the present invention is such that the content of resin components having a number average molecular weight of at

least 2,000 is ordinarily at least 50% by weight, preferably at least 60% by weight and especially preferably at least 70%. The molecular weight distribution expressed as the ratio $\overline{Mw}/\overline{Mn}$ of the weight average molecular weight $\overline{Mw}$ to the number average molecular weight Mn is preferably in the range of from 1.8 to 20 and especially preferably in the range of from 2 to 10. The melting point of the high-molecular-weight novolak resin is ordinarily higher than 120°C. and preferably higher than 150°C.

Preferably, the high-molecular-weight novolak resin comprises substantially linear novolak recurring units formed by condensation of a phenol component containing 70 to 100 mole %, preferably 80 to 100 mole %, especially preferably 90 to 100 mole %, of at least one bifunctional phenol represented by the general formula [I]:

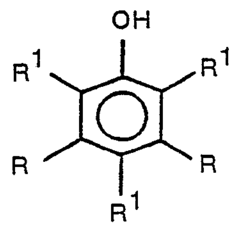

[I]

wherein two of the three $R^1$'s are hydrogen atoms and the remaining $R^1$ is an alkyl group having 1 to 8 carbon atoms, an aryl group having 6 to 10 carbon atoms, a halogen atom or a hydroxyl group, and the two R's, which may be the same or different, represent a hydrogen atom, an alkyl group having 1 to 8 carbon atoms, a halogen atom or a hydroxyl group, with at least one aldehyde represented by the general formula [II]:

$$R^2\text{—CHO} \qquad [II]$$

wherein $R^2$ represents a hydrogen atom, a methyl group or a halogenated methyl group, preferably a hydrogen atom or methyl group, especially preferably a hydrogen atom. In the general formula [I], the $R^1$ which is not a hydrogen atom is preferably an alkyl group of 1 to 8 carbon atoms, especially preferably a methyl, ethyl, isopropyl, sec-butyl, tert-butyl or octyl group, and preferably one of two R's is a hydrogen atom and the remaining R is a hydrogen atom or an alkyl group having 1 to 8 carbon atoms. Especially preferably the two R's are hydrogen atoms. Preferably up to 30 mole %, more preferably up to 20 mole % and especially preferably up to 10 mole % of the phenol component condensed with the or each aldehyde of general formula [II] is a trifunctional phenol. The trifunctional phenol may be of the general formula [I] except that all three $R^1$ groups represent hydrogen atoms.

In these novolak recurring units, the bifunctional phenol represented by the general formula [I] is present in the polymer chain in the form of hydroxyarylene units represented by the general formula [III]:

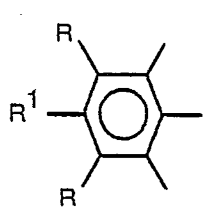

or

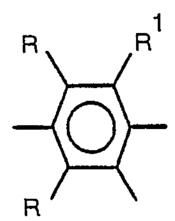

[III]

wherein $R^1$ and R are as defined above.

The bifunctional phenol of the general formula [I] is present at the terminals of the polymer chain in the form of hydroxyaryl units represented by the general formula [IV]:

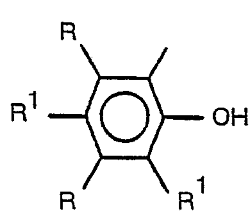

or

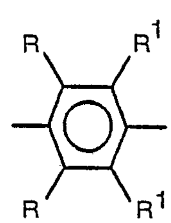

[IV]

wherein $R^1$ and R are as defined above.

The trifunctional phenol is present in the polymer chain in the form of hydroxyarylene units similar to those represented by the general formula [III] and is present at the terminals of the chain in the form

of hydroxyaryl units similar to those represented by the general formula [IV].

In the high-molecular-weight novolak resin the aldehyde represented by the general formula [II] is present in the novolak recurring units in the form of alkylidene units represented by the general formula [V]:

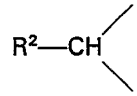

[V]

wherein $R^2$ is as defined above.

The novolak recurring units constituting the high-molecular-weight novolak resin forms a substantially linear chain structure in which the above-mentioned hydroxyarylene units and alkylidene units are alternately arranged and connected to one another. More specifically, the structure of the novolak type recurring units is such that when the phenol component is solely of bifunctional phenol(s) represented by the general formula [I], the resin is linear. If the content of trifunctional phenol is increased, the resin sometimes has a branched structure. The ratio of the aldehyde component to the total phenol component in the novolak recurring units is such that the amount of aldehyde component is ordinarily in the range of from 0.90 to 1.0 mole, preferably from 0.93 to 1.0 mole, per mole of the total phenol component. Ordinarily, the novolak recurring units are free of methylol groups. However they may comprise methylol groups in a minute amount, for example up to 0.01 mole per mole of total phenol component.

In the phenol component in the novolak recurring units a bifunctional phenol is a phenol in which two of the two ortho-positions and on para-position with respect to the phenolic hydroxyl group are occupied by hydrogen atoms. Consequently a bifunctional phenol represented by the general formula [I] has two hydrogen atoms on the benzene nucleus active to the substitution reaction. More specifically, a bifunctional phenol is a phenol of the general formula [I] which has an alkyl group having 1 to 8 carbon atoms, an aryl group having 6 to 10 carbon atoms, a halogen atom or a hydroxyl group at one of the positions ortho- or para- to the hydroxyl group. For example, there can be mentioned ortho- and para-isomers of alkylphenols such as cresol, ethylphenol, n-propylphenol, isopropylphenol, n-butylphenol, sec-butylphenol, tert-butylphenol, sec-amylphenol, tert-amylphenol, hexylphenol, heptylphenol and octylphenol, halogenated phenols such as fluorophenol, chlorophenol and bromophenol, and arylphenols such as phenylphenol and tolylphenol. Furthermore, the bifunctional phenol represented by the general formula [I] can be 2,3-xylenol, 3,4-xylenol, 2,5-xylenol, 2,3-diethylphenol, 3,4-diethylphenol, 2,5-diethylphenol, 2,3-diisopropylphenol, 3,4-diisopropylphenol, 2,5-diisopropylphenol, 2,3-dichlorophenol, 3,4-dichlorophenol, 2,5,-dichlorophenol, 2-methyl-3-phenylphenol, 3-methyl-4-phenylphenol and 2-methyl-5-phenylphenol. The bifunctional phenol component in the novolak may be a mixture of two or more of bifunctional phenols.

The trifunctional phenol is a phenol having on the benzene nucleus three hydrogen atoms active to the substitution reaction. In other words both of the orthopositions and the para-position with respect to the phenolic hydroxyl group are occupied by hydrogen atoms. Such trifunctional phenol can be meta-subtituted and 3,5-substituted phenols. Substituents at the meta- or 3,5-positions can be alkyl groups, halogen atoms or hydroxyl groups. Trifunctional phenols, represented by the general formula [VI] are preferred:

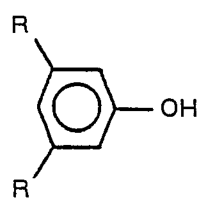

[VI]

wherein R stands for a hydrogen atom, an alkyl group having 1 to 8 carbon atoms, a halogen atom or a hydroxyl group, and two R's may be the same or different.

Specific examples of trifunctional phenols include phenol, meta-substituted phenols such as m-cresol, m-ethylphenol, m-n-propylphenol, m-isopropylphenol, m-n-butylphenol, m-sec-butylphenol, m-tert-butylphenol, m-n-amylphenol, m-sec-amylphenol, m-tert-amylphenol, m-hexylphenyl, m-heptylphenol, m-octylphenol, m-fluorophenol, m-chlorophenol, m-bromophenol and resorcinol, and 3,5-disubstituted phenols such as 3,5-xylenol, 3,5-diethylphenol, 3,5-diisopropylphenol, 3,5-di-sev-butylphenol, 3,5-di-tert-butylphenol, 3,5-di-sec-amylphenol, 3,5-di-tert-amylphenol, 3,5-dihexylphenol, 3,5-diheptylphenol, 3,5-dioctylphenol, 3,5-dichlorophenol, 3,5-difluorophenol, 3,5-dibromophenol and 3,5-diiodophenol. Among these trifunctional phenols, those represented by the general formula [IV] in which one of the two R groups is a hydrogen atom and the other R group is a hydrogen atom, an alkyl group having 1 to 8 carbon atoms or a chlorine atom are especially preferred. Phenols in which one of the two R groups is a hydrogen atom and the other R group is a hydrogen atom, a methyl group, an isopropyl group, a sec-butyl group, a tert-butyl group or an octyl group are particularly preferred.

The aldehyde component in the novolak recurring units is preferably an aldehyde represented by

the general formula [II]. Such aldehydes include formaldehyde, acetaldehyde, monochloroacetaldehyde, dichloroacetaldehyde and trichloroacetaldehyde. Formaldehyde and acetaldehyde, especially formaldehyde, are preferred. The aldehyde component is present in the high-molecular-weight novolak resin in the form of an alkylidene group represented by the general formula [V].

In the present invention, the novolak recurring units may contain intervening or bridging groups (also called "chain extender components units" hereinafter) consisting of a divalent hydrocarbon group, which appear between blocks of the novolak recurring units having a number average molecular weight of 250 to 1,200. Resins of this type are characterized in that the novolak recurring unit blocks (a) having a relatively low molecular weight and the chain extender component units (b) are alternately arranged and connected to one another. The molecular weight of the resin is thus increased. The novolak recurring unit blocks (a) are bonded to the terminals of the molecule of the resin. The simplest structure of a resin of this type comprises two novolak recurring unit blocks (a) connected to each other through one chain extender component unit (b). Another simple structure comprises three novolak recurring unit blocks (a) and two chain extender component units (b) which are alternately arranged and connected to one another. Furthermore, there can be mentioned a structure comprising four novolak recurring unit blocks (a) and three chain extender component units (b) which are similarly alternately arranged and connected to one another, and a structure comprising n novolak type recurring unit blocks (a) and (n — 1) chain extender component units (b) which are alternately arranged and connected to one another.

The high-molecular-weight novolak resin can thus have a polymer chain which can be represented diagrammatically substantially by the formula [VII]:

$$Z\!-\!(Y_p\!-\!Z)_n\!-\!Y_p\!-\!Z \qquad [VII]$$

wherein Z stands for a substantially linear novolak recurring unit block formed by condensation of a phenol component containing at least 70 mole % of at least one bifunctional phenol of general formula [I] and at least one aldehyde represented by general formula [II], Y stands for an intervening group consisting of a divalent hydrocarbon group, p is 0 or 1, and n is zero or an integer of at least 1.

In a high-molecular-weight novolak resin containing the chain extender component units, p is 1.

Group Y can be a hydrocarbon group having 1 to 16 carbon atoms, such as an alkylidene group, alkylene group, cycloalkylene group, cycloalkylidene group, arylalkylidene group, arylalkylene group or arylene-bis-alkylene group [$—R^3—Ar—R^4—$ wherein Ar is an arylene group and $R^3$ and $R^4$, which may be the same or different, are alkylene groups]. The alkylidene group can be a methylene, ethylidene, propylidene or butylidene group. The alkylene group can be an ethylene, propylene, isopropylene, butylene, pentylene or hexylene group. The cycloalkylene group can be a cyclopentylene, cyclohexylene or methylcyclohexylene group. The cycloalkylidene group can be a cyclopentylidene, cyclohexylidene or methylcyclohexylidene group. The arylalkylidene group can be a benzylidene, o-xylidene, m-xylidene or p-xylidene group. The arylalkylene group can be a styrene, $\alpha$-methylstyrene or p-methylstyrene group. The arylene-bis-alkylene group can be an o-xylylene, m-xylylene or p-xylylene group. Alkylidene, alkylene, cycloalkylidene, cycloalkylene, arylalkylidene, arylalkylene and arylene-bis-alkylene groups are preferred chain extender component units (b). Alkylidene groups having 1 to 4 carbon atoms, alkylene groups having 2 to 5 carbon atoms, arylalkylidene groups having 7 to 9 carbon atoms, aralyalkylene groups having 8 to 10 carbon atoms and arylene-bis-alkylene groups having 8 to 10 carbon atoms are especially preferred.

When the molecular weight of these chain extender component units (b) is too high, the melting point of the resulting high-molecular-weight novolak resin is reduced but its flexibility is increased. Therefore, even if such a resin is included with a setting resin, there can hardly be obtained a resin composition excellent in heat resistance and mechanical properties. Accordingly, it is preferred for the molecular weight of the chain extender component unit (b) to be from 14 to 200 and especially from 14 to 170.

The high-molecular-weight novolak resin can be prepared according to a process comprising reacting (A) (i) a phenol component mainly composed of at least one bi-functional phenol represented by the general formula [I] or (ii) a novolak substituted phenolic resin consisting of a phenol component mainly composed of the at least one bifunctional phenol of general formula [I] and an aldehyde represented by the general formula [II] and having a number average molecular weight of from 250 to 1200, with (B) a chain extender selected from (i) dimethylolated products of bifunctional and trifunctional phenols, (ii) resol substituted phenolic resins consisting of a phenol component mainly composed of the at least one bifunctional phenol of general formula [I] and said aldehyde of general formula [II] and having a number average molecular weight of from 250 to 1200, (iii) aldehydes, (iv) ketones, (v) diols and (vi) dihalides, with the proviso that when (A) is the phenol (i), the chain extender (B) is the resol substituted phenol resin (ii), in the presence of an acid catalyst, so that the phenol component in the final novolak substituted phenolic resin is mainly, preferably at least 70 mole %, said bifunctional phenol, until the number average molecular weight of the final novolak substituted phenolic resin is at least 1500 as measured by the vapour pressure osmotic method in N,N-dimethylacetamide as the solvent.

The high-molecular-weight novolak resin is incorporated in the resin composition of the present invention in an amount of 10 to 200 parts by weight per 100 parts by weight of the setting resin. In order to greatly improve the heat resistance and mechanical characteristics of the resin composition of the present invention, it is preferred that the high-molecular-weight novolak resin be incorporated in an amount of 30 to 150 parts by weight per 100 parts by weight of the setting resin.

An inorganic filler (C) can be incorporated in the resin composition of the present invention according to need. The inorganic filler can be silica, silica-alumina, alumina, glass powder, glass beads, glass fibers, asbestos, mica, graphite, carbon fibres, titanium oxide, molybdenun disulphide, beryllium oxide, magnesium oxide, calcium oxide, magnesium hydroxide, calcium hydroxide, talc, celite, metal powder or metal fibres. When these inorganic fillers are used, the effect of improving the heat resistant and mechanical characteristics can be enhanced. Moreover, if glass fibre, carbon fibre, or asbestos is employed as the inorganic filler, mechanical strength characteristics such as impact strength and compresion strength can be improved. If graphite, titanium oxide or molybdenum is included as the inorganic filler, abrasion resistance is improved. Furthermore, if mica, asbestos or glass powder is used, arc resistance is improved, and if carbon black, metal fibre, metal powder or graphite is employed, electric properties such as electric conductivity are improved. Still further, if alumina, titanium oxide or beryllium oxide is included, heat conductivity is improved. The amount of organic filler depends on, for example, the setting resin, the kind of filler and the intended use of the resin composition. However, the inorganic filler is ordinarily incorporated in an amount of 10 to 250 parts by weight, preferably 30 to 200 parts by weight, especially preferably 60 to 150 parts by weight, per 100 parts by weight of the setting resin.

Various other additives may be included in the resin composition of the present invention according to need. For example, where the setting resin is capable of being cured by a curing agent, an appropriate curing agent, a curing promotor, a thermal stabilizer, an antioxidant, a lubricant and a filler other than the inorganic filler (C) may be employed according to need. Even when the high-molecular weight novolak resin (B), can be a curing agent for the setting resin (A), a further curing agent may be added according to need. Where the high-molecular-weight novolak resin (B) cannot be a curing agent for the setting resin (A), a curing agent such as mentioned above is ordinarily added. These additives to be added according to need are appropriately selected and used depending on the kind of setting resin and the intended use of the resulting resin compositions. The amount of these additives are similarly appropriately determined.

The following Examples illustrate the present invention. Referential and Comparative Examples are also provided. Mesh sizes are according to the J.I.S. standard.

## Referential Example 1

A reaction vessel was charged with 100 g of a novolak p-cresol/formaldehyde resin ($\overline{Mn} = 510$) obtained according to the conventional process, 31.1 g of 2,6-dimethylol-p-cresol, 0.28 ml of 60% nitric acid and 100 ml of o-dichlorobenzene. Reaction was carried out at 175°C. for 4 hours under stirring. The reaction mixture was added to 1 l of methanol. After removal of unreacted substances, the reaction product was dried to obtain 120 g (yield: 97%) of a resin. The number average molecular weight $\overline{Mn}$ was 5550 as measured according to the vapour pressure osmotic method (in dimethylacetamide at 90°C). The molecular weight distribution ($\overline{Mw}/\overline{Mn}$) of the resin was determined according to gel permeation chromatography was 6.2 and the melting point of the resin as measured by the microscope method was higher than 300°C.

Data of a $^1H$ nuclear magnetic resonance spectrum of the resin as determined in pyridine-$d_5$ are shown in Table 1. From the data, the presence of the methylene proton of the methylol group in the vicinity of the value of 5.3 was not observed. Accordingly, it was confirmed that the obtained resin is a novolak p-cresol/formaldehyde resin having a linear structure in which the p-cresol units and the methylene units are alternately arranged. Since the resin was completely dissolved in dimethylacetamide, it was confirmed that a three-dimensional crosslinked structure (gelled portion) is not present.

TABLE 1

| τ Value | Attribution | Intensity Ratio |
|---|---|---|
| 7.9 | $-CH_3$ | 10.0 |
| 6.2 | $-CH_2-$ | 5.0 |
| 3.1–3.2 | 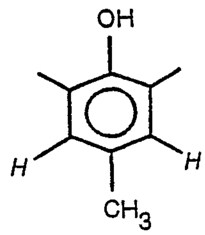 | 7.5 |
| 3.0 | 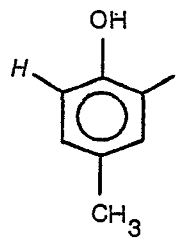 | |
| 1.75 | 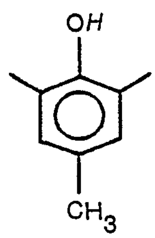 | 3.0 |

Referential Examples 2 to 4

The procedures of Referential Example 1 were repeated except that a novolak o-cresol/formaldehyde (Referential Example 2) p-tert-butylphenol/formaldehyde (Referential Example 3) or p-chlorophenol/formaldehyde resin (Referential Example 4) was used instead of the novolak p-cresol/formaldehyde resin used in Referential Example 1. The number average molecular weight $\overline{Mn}$ and structure of each of the obtained resins were determined according to the same methods as described in Referential Example 1. It was found that each of the resins is a novolak substituted phenolformaldehyde resin having a linear structure in which the phenol units and the methylene units are alternately arranged, as in the product of Referential Example 1. Since each of these resins was completely dissolved in dimethylacetamide, it was confirmed that a three-dimensional crosslinked structure (gelled portion) is not present in any of the obtained resins. Properties of these resins are shown in Table 2.

TABLE 2

| Referential Example No. | Starting Novolak | Substituted Phenolic Resin | | Formed Resin | |
|---|---|---|---|---|---|
| | Kind | $\overline{M}n$ | Amount (g) | Amount (g) | Yield (%) |
| 2 | o-cresol/formaldehyde resin | 550 | 100 | 121 | 100 |
| 3 | p-tert-butylphenol/formaldehyde resin | 450 | 104 | 125 | 100 |
| 4 | p-chlorophenol/formaldehyde resin | 430 | 104 | 120 | 96 |

| Referential Example No. | Starting Novolak | Properties of Formed Resin | | | |
|---|---|---|---|---|---|
| | Kind | $\overline{M}n$ | $\overline{M}w/\overline{M}n$ | Melting Point (°C) | Structure |
| 2 | o-cresol/formaldehyde resin | 1930 | 3.23 | 134 | Linear |
| 3 | p-tert-butylphenol/formaldehyde resin | 2510 | 1.70 | 200 | ditto |
| 4 | p-chlorophenol/formaldehyde resin | 2100 | 1.88 | 230 | ditto |

Referential Examples 5 and 6

The procedures of Referential Example 1 were repeated except that 100 g of the novolak m-cresol/p-cresol/formaldehyde copolycondensed resins shown in Table 3 were used instead of the novolak p-cresol/formaldehyde resin. The structures of the obtained resins were determined according to the method described in Referential Example 1.

The number average molecular weight ($\overline{M}n$), molecular weight distribution and melting point of the obtained resin were determined according to the vapor pressure osmotic method (at 90°C, in dimethylacetamide), gel permeation chromatography and microscope method, respectively. The ratio between the p-cresol and m-cresol units constituting the resin was determined from data of $^1H$ nuclear magnetic resonance spetrum determined in pyridine-$d_5$. The obtained results are shown in Table 3.

The structures of the obtained resins were examined in the same manner as described in Referential Example 1. It was found that the resins obtained in Referetial Examples 5 and 6 contain both the p-phenol and m-phenol units as the phenol units and they are novolak substituted phenol/formaldehyde resins having a linear structure in which these phenol units and methylene units are alternately arranged and parts of the m-phenol units are branched. Since these resins were completely dissolved in dimethylacetamide, it was confirmed that these resins do not contain a three-dimensional cross-linked structure (gelled portion). The obtained results are shown in Table 4.

TABLE 3

| Value | Attribution | Intensity Ratio Referential Example 5 | Intensity Ratio Referential Example 6 |
|---|---|---|---|
| 7.9 | $-CH_3$ | 10.0 | 10.0 |
| 6.1–6.3 | $-CH_3-$ | 4.8 | 4.8 |
| 3.3–3.4 | 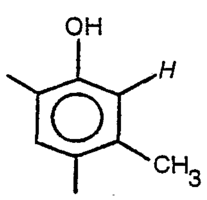 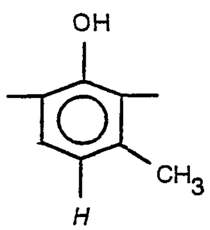 | 0.9 | 1.9 |
| 3.1–3.2 | 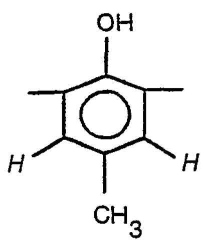 | 6.8 | 5.9 |
| 3.0 | 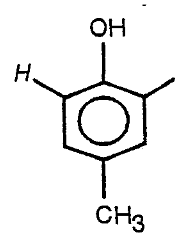 | | |
| 1.75 | 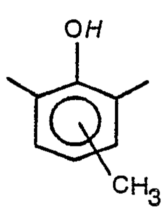 | 2.5 | 2.5 |

TABLE 4

| Referential Ex. No. | Starting Novolak Phenol/Formaldehyde Resin | | | | Amount (g) of Formed Resin | Properties of Formed Resin | | | | | |
|---|---|---|---|---|---|---|---|---|---|---|---|
| | Kind | Phenol Composition (mole %) | | $\overline{M}n$ | | Phenol Composition (mole %) | | $\overline{M}n$ | $\overline{M}w/\overline{M}n$ | Melting Point (°C) | Structure |
| | | p-cresol | m-cresol | | | p-cresol | m-cresol | | | | |
| 5 | m-cresol/ p-cresol/ Formaldehyde copoly- condensed resin | 88 | 12 | 380 | 112 | 89 | 11 | 2190 | 4.7 | 72.80 | partially branched linear structure |
| 6 | m-cresol/ p-cresol/ Formaldehyde copoly- condensed resin | 76 | 24 | 550 | 105 | 79 | 21 | 2310 | 4.8 | 72.80 | partially branched linear structure |

## Referential Example 7

A reaction vessel equipped with a thermometer, a stirrer and a reflux cooler was charged with 94 g (1 mole) of phenol, 70 g (0.86 mole) of 37% formalin and 1 ml (0.264 millimole) of 1% by weight hydrochloric acid. The mixture was heated and stirred and reaction was conducted for 4 hours from the point of initiation of refluxing. Then, 1 g (5.3 millimoles) of p-toluenesulphonic acid was added to the reaction mixture and a device for dehydration under reduced pressure was attached to the reaction vessel. Removal of water and phenol was conducted under heating under a reduced pressure of 1.33 kPa (10 mm Hg) until the temperature of the reaction product was 180°C. As the result, 88 g (yield: 84%) of a brown solid resin was obtained. It was found that 36% by weight of the obtained resin is insoluble in N,N-dimethylacetamide and the resin contains a gelled portion (three-dimensional crosslinked structure). It also was found that the remaining 74% by weight of the resin is soluble in N,N-dimethylacetamide and consisting of a novolak phenol/formaldehyde resin having a branched chain structure. The average molecular weight $\overline{M}n$ of this branched novolak type phenol/formaldehyde resin was 1090 as determined according to the vapour pressure osmotic method.

## Referential Example 8

A reaction vessel equipped with a thermometer, a stirrer and a reflux cooler was charged with 94 g (1 mole) of phenol, 70 g (0.86 mole) of 37% formalin and 1 ml (0.274 millimole) of 1% by weight hydrochloric acid. The mixture was heated and stirred. Reaction was conducted for 4 hours from intiation of refluxing. Then, 1 g (5.3 millimoles) of p-toluene-sulphonic acid was added to the reaction mixture and a device for dehydration under reduced pressure was attached to the reaction vessel. Removal of water and phenol was conducted under heating under a reduced pressure of 1.33 kPa (10 mmHg) until the temperature of the reaction product was 180°C and removal of water and phenol was then conducted for another 30 minutes. As the result, 90 g (yield: 67%) of a brown solid resin was obtained. It was found that 58% by weight of the obtained resin is insoluble in N,N-dimethylacetamide and the resin contains a gelled portion (three-dimensional crosslinked structure). It also was found that the remaining 42% by weight of the resin is soluble in N,N-dimethylacetamide and consists of a novolak phenol/formaldehyde resin having a branched chain structure. The average molecular weight $\overline{M}n$ of this branched novolak phenol/formaldehyde resin was 470 as determined according to the vapour pressure osmotic method.

## Referential Example 9

A reaction vessel equipped with a thermometer, a stirrer and a reflux cooler was charged with 108 g (1 mole) of p-cresol, 70 g (0.86 mole) of 37% formalin and 1 ml (0.274 millimole) of 1% by weight hydrochloric acid. The mixture was heated and stirred. Reaction was conducted for 4 hours from initiation of refluxing. Then, 1 g (5.3 millimoles) of p-toluene-sulphonic acid was added to the reaction mixture and a device for dehydration under reduced pressure was attached to the reaction vessel. Removal of water and phenol was conducted under heating under a reduced pressure of 1.33 kPa (10 mmHg) until the temperature of the reaction product was 180°C. As the result, 89 g (Yield: 75%) of a brown solid resin was obtained.

Since the obtained resin completely dissolved in N,N-dimethylacetamide, it was confirmed that the resin is free of a three-dimensional crosslinked structure (gelled portion). It was confirmed that the obtained resin is a novolak p-cresol/formaldehyde resin having a linear molecular structure. The number average molecular weight $\overline{M}n$ of the obtained resin was 670 as determined according to the vapour pressure osmotic method.

## Referential Example 10.

An autoclave having a capacity of 500 ml was charged with 100 g of a novolak p-cresol/formaldehyde resin ($\overline{M}n = 510$, $\overline{M}w/\overline{M}n = 1.4$, melting point = 83°C) prepared according to the conventional method, 27.6 g of p-xylylene glycol, 0.28 ml of 60% nitric acid and 270 ml of toluene. Reaction was carried out at 175°C, under stirring for 4 hours. The reaction mixture was dissolved in 1 l of methanol to remove unreacted substances. The reaction product was dried to obtain 72 g (yield: 60%). The number average molecular weight $\overline{M}n$ of the obtained resin was 2000 as determined according to the vapour pressure osmotic method in dimethylacetamide at 90°C., and the molecular weight distribution $\overline{M}w/\overline{M}n$ of the resin was 2.5 as determined according to gel permeation chromatography. The melting point of the resin was higher than 300°C. as determined according to the microscope method. The structure of the resin was examined by $^1H$ nuclear magnetic resonance spectrum in pyridine-$d_5$. It was found that the resin has a novolak p-cresol/formaldehyde resin skeleton. Since a high-molecular-weight resin different from the starting resin was formed, it was confirmed that the starting low-molecular-weight novolak p-cresol/formaldehyde resin was reacted with p-xylylene glycol and the molecular weight was increased by alternate arrangement and connection of the starting novolak p-cresol/formaldehyde units and p-xylylene units and that novolak p-cresol/formaldehyde resin units were connected to the molecule terminals of the formed resin. Since the formed resin was completely dissolved in dimethylacetamide, tetrahydrofuran and the like, it was confirmed that the formed resin is free of a three-dimensional crosslinked structure (gelled portion) and is substantially linear.

Referential Examples 11 to 18

The procedures of Referential Example 10 were repeated except that a chain extender shown in Table 5 was used instead of the p-xylylene glycol used in Referential Example 10. The number average molecular weights $\overline{M}n$ and structures of the obtained resins were determined according to the methods described in Referential Example 10. In each of the obtained resins, it was confirmed that the molecule terminals of the starting novolak p-cresol/formaldehyde resin were reacted with the chain extender shown in Table 5 and the molecular weight was increased by alternate arrangement and connection of the novolak p-cresol/formaldehyde resin units and the units of the chain extender shown in Table 5. It also was confirmed that the novolak p-cresol/formaldehyde resin units were connected to the molecule terminals of the formed resin. Since the formed resin was completely dissolved in dimethylacetamide, tetrahydrofuran and the like, it was confirmed that each of the formed resins is free of a three-dimensional crosslinked structure (gelled portion) and is substantially linear. Properties of the obtained resins are shown in Table 5.

TABLE 5

| Referential Example No. | Chain Extender: Kind | Chain Extender: Amount (g) | Formed Resin: Amount (g) | Formed Resin: Yield (%) | Chain Extender Unit | Properties of Formed Resin: $\overline{Mn}$ | Properties of Formed Resin: Mw/mn | Properties of Formed Resin: Melting Point (°C) | Properties of Formed Resin: Structure |
|---|---|---|---|---|---|---|---|---|---|
| 11 | ethylene glycol | 12.4 | 64 | 61 | $-CH_2CH_2-$ | 2000 | 2.5 | 300 | linear |
| 12 | acetone | 11.6 | 73 | 68 | 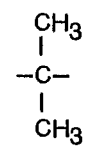 | 2050 | 2.1 | 300 | ditto |
| 13 | p-xylylene dichloride | 35.0 | 79 | 62 | 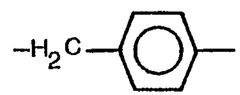 | 2370 | 2.1 | 300 | ditto |
| 14 | propylene glycol | 16.0 | 73 | 68 | 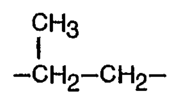 | 2100 | 2.1 | 300 | ditto |
| 15 | cyclohexylene glycol | 23.2 | 78 | 67 | 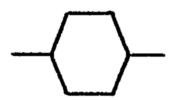 | 2400 | 2.6 | 300 | ditto |
| 16 | cyclohexanone | 18.6 | 71 | 62 | 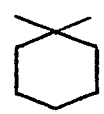 | 2100 | 2.1 | 300 | ditto |

TABLE 5 (Continued)

| Referential Example No. | Chain Extender | | Formed Resin | | Chain Extender Unit | Properties of Formed Resin | | | |
|---|---|---|---|---|---|---|---|---|---|
| | Kind | Amount (g) | Amount (%) | Yield (%) | | $\overline{Mn}$ | Mw/mn | Melting Point (°C) | Structure |
| 17 | acetophenone | 23.2 | 72 | 60 | 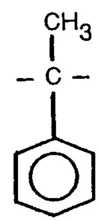 | 2050 | 2.1 | 300 | ditto |
| 18 | styrene dichloride | 35.0 | 78 | 65 | 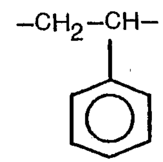 | 2200 | 2.4 | 300 | ditto |

Referential Examples 19 to 21

The procedures of Referential Example 10 were repeated except that a novolak o-cresol/formaldehyde resin, a novolak p-tert-butylphenol/formaldehyde resin, and novolak p-chlorophenol/formaldehyde resin were used as shown in Table 6 instead of the novolak p-cresol/formaldehyde resin used in Referential Example 10. The number average molecular weights $\overline{Mn}$ and molecular weight distributions $\overline{Mw}/\overline{Mn}$ of the obtained resins were determined in the same manner as described in Referential Example 10. The structures of the formed resins were examined in the same manner as described in Referential Example 10 and it was confirmed that in each of the obtained resins, the molecule terminals of the starting novolak type substituted phenol/formaldehyde resin were reacted with p-xylylene glycol and the molecular weight was increased by alternate arrangement and connection of the novolak substituted phenol/formaldehyde resin units and the p-xylylene units, and that the novolak substituted phenol/formaldehyde resin units were connected to the molecule terminals of the formed resin. Since the obtained resins were completely dissolved in dimethylacetamide, tetrahydrofuran and the like, it was confirmed that each of the formed resins is free of a three-dimensional crosslinked structure (gelled portion) and is substantially linear). Properties of the so obtained resins are shown in Table 6.

TABLE 6

| Referential Example No. | Starting Novolak Substituted Phenolic Resin | | | | |
|---|---|---|---|---|---|
| | Kind | Amount (g) | $\overline{Mn}$ | $\overline{Mw}/\overline{Mn}$ | Melting Point (°C) |
| 19 | o-cresol/formaldehyde resin | 100 | 550 | 1.58 | 60–68 |
| 20 | p-tert-butylphenol/ formaldehyde resin | 104 | 450 | 1.41 | 62–70 |
| 21 | p-chlorophenol/ formaldehyde resin | 104 | 430 | 1.88 | 70–81 |

TABLE 6 (Continued)

| Referential Example No. | Starting Novolak Substituted Phenolic Resin | Formed Resin | | Properties of Formed Resin | | | | |
|---|---|---|---|---|---|---|---|---|
| | Kind | Amount (g) | Yield (%) | Chain Extender Unit | $\overline{M}n$ | $\overline{M}w/\overline{M}n$ | Melting Point (°C) | Structure |
| 19 | o-cresol/formaldehyde resin | 72 | 60 | 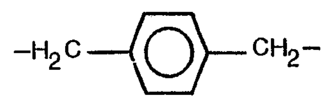 | 1900 | 2.7 | 130 | linear |
| 20 | p-tert-butylphenol/ formaldehyde resin | 78 | 63 | 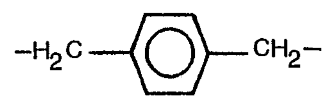 | 2020 | 1.7 | 190 | ditto |
| 21 | p-chlorophenol/ formaldehyde resin | 80 | 64 | 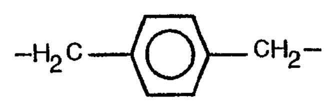 | 2000 | 1.8 | 220 | ditto |

Referential Examples 22 and 23

The procedures of Referential Example 10 were repeated except that 100 g of a low-molecular-weight novolak m-cresol/p-cresol/formaldehyde copolycondensed resin having a linear structure including branches was used instead of the low-molecular weight novolak p-cresol/formaldehyde resin. The structures of the obtained resins were examined as described in Referential Example 10. It was confirmed that in each of the obtained resins, a novolak m-cresol/p-cresol/formaldehyde copolycondensed resin skeleton was present. Since a high-molecular-weight resin different from the starting resin was formed, it was confirmed that the starting low-molecular weight novolak m-cresol/p-cresol/formaldehyde copolycondensed resin was reacted with p-xylylene glycol, and that the molecular weight was increased by alternate arrangement and connection of the novolak m-cresol/p-cresol/formaldehyde copolycondensed resin units and p-xylylene units. It also was confirmed that the novolak m-cresol/p-cresol/formaldehyde resin units were connected to the molecule terminals of the formed resin. Since these resins were completely dissolved in dimethylacetamide, tetrahydrofuran and the like, it was confirmed that each of these resins is free of a three-dimensional crosslinked structure (gelled portion) and is substantially linear. Properties of the obtained resins are shown in Table 7.

TABLE 7

| Referential Example No. | Starting Novolak Resin | Properties of Starting Novolak Substituted Phenolic Resin: Phenol Composition (mole 10%) p-cresol | m-cresol | $\overline{Mn}$ | $\overline{Mw}/\overline{Mn}$ | Melting Point (°C) | Structure |
|---|---|---|---|---|---|---|---|
| 22 | m-cresol/p-cresol/ formaldehyde copoly-condensed resin | 88 | 12 | 380 | 2.1 | 60–70 | linear structure including branches |
| 23 | ditto | 76 | 24 | 550 | 18.9 | 100–125 | ditto |

| Referential Example No. | Starting Novolak Resin | Formed Resin: Amount | Formed Resin: Yield | Properties of Formed Resin: Chain Extender Component Unit | $\overline{Mn}$ | $\overline{Mw}/\overline{Mn}$ | Melting Point (°C) | Structure |
|---|---|---|---|---|---|---|---|---|
| 22 | m-cresol/p-cresol/ formaldehyde copoly-condensed resin | 72 | 60 | 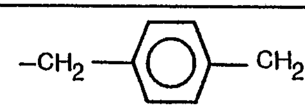 | 2010 | 2.8 | 280 | linear structure including branches |
| 23 | ditto | 78 | 63 | ditto | 2130 | 3.7 | >280 | ditto |

Examples 1 to 38 and Comparative Examples 1 to 12

The high molecular weight novolak substituted phenolic resins obtained in Referential Examples 1 to 23 and ordinary low-molecular-weight novolak substituted phenolic resins used as the starting materials in these Referential Examples were incorporated in setting resins, and the properties of the resulting resin composition were examined and evaluated. The resin compositions used for evaluation of the properties were prepared according to any of the following methods [see Table 8].

Method (A) of Preparation of Resin Compositions

A mixture comprising 15 g of the novolak substituted phenolic resin shown in Table 8, 25 g of a bisphenol A type epoxy resin (EPOMIK R—301) manufactured and supplied by Mitsui Petrochemical-Epoxy Co.), 150 g of fused silica, 0.25 g of a $BF_3$-2-methylimidazole complex and 0.75 g of a montanic acid wax was kneaded on a roll maintained at 80°C for 7 hours. After cooling, the kneaded mixture was pulverised to particles having a size of 7 to 100 mesh, and the pulverization product was press-moulded in a mould maintained at 250°C. for 20 minutes under 100 Kg/cm$^2$ (actual pressure). The moulded composition was post-cured at 250°C for 30 minutes. The physical properties of the moulded product were measured to obtain results shown in Table 8.

Method (B) of Preparation of Resin Compositions

A mixture comprising 15 g of the novolak substituted phenolic resin shown in Table 8, 25 g of a bisphenol A type epoxy resin (EPOMIK R—301 manufactured and supplied by Mitsui Petrochemical-Epoxy Co.), 95 g of fused silica, 0.25 g of a $BF_3$-2-methylimidazole complex and 0.75 g of a montanic acid wax was kneaded on a roll maintained at 80°C. for 7 minutes. After cooling, the kneaded mixture was pulverised to particles having a size of 7 to 100 mesh. The pulverised composition was press-moulded in a mould maintained at 250°C. for 20 minutes under 100 Kg/cm$^2$ (actual pressure). The moulded composition was post-cured for 30 minutes. The physical properties of the moulded product were determined to obtain results shown in Table 8.,

Method (C) of Preparation of Resin Compositions

A mixture comprising 37 g of the high-molecular-weight p-cresol/formaldehyde resin shown in Table 8, 63 g of a bisphenol A type epoxy resin (EPOMIK R—140 manufactured and supplied by Mitsui Petrochemical-Epoxy Co.) and 0.1 g of 2-methylimidazole was dissolved in a mixed solvent comprising 25 g of methylethyl ketone and 5 g of methanol, and a glass cloth (Glass Cloth WE—18K—BZ2 manufactured and supplied by Nittobo Co.) was impregnated with the so formed varnish and press-moulded at 170°C. for 1 hour. The press-moulded product was post-cured at 180°C. for 8 hours to obtain a laminate sheet. The flexural strength of the laminate sheet was measured at 21, 150 and 180°C. to obtain results shown in Table 8.

Method (D) of Preparation of Resin Compositions

A mixture comprising the novolak substituted phenolic resin shown in Table 8, 25 g of a novolak phenol-epoxy resin (Epoxylated Phenol Novolak EPPN—201 manufactured and supplied by Nippon Chemical Co.), 95 g of fused silica, 0.25 g of a $BF_3$-2-methylimidazole complex and 0.75 g of a montanic acid wax was kneaded on a roll maintained at 80°C for 7 minutes. After cooling, the kneaded mixture was pulverised to particles having a size of 7 to 100 mesh. The pulverised composition was press-moulded in a mould maintained at 250°C. for 20 minutes under 100 Kg/cm$^2$ (actual pressure). The press-moulded composition was post-cured at 250°C. for 30 minutes. The physical properties of the obtained moulded product were measured to obtain results shown in Table 8.

Method (E) of Preparation of Resin Compositions

A mixture comprising 15 g of the novolak substituted phenolic resin shown in Table 8, 25 g of a bisphenol A epoxy resin (EPOMIK R—301 manufactured and supplied by Mitsui Petrochemical-Epoxy Co.), 27 g of an inorganic filler shown in Table 8, 0.25 g of a $BF_3$-2-methylimidazole complex and 0.75 g of a montanic acid wax was kneaded on a roll maintained at 80°C. for 7 minutes. After cooling, the kneaded composition was pulverised to particles having a size of 7 to 100 mesh. The pulverised composition was press-moulded in a mould maintained at 80°C. for 20 minutes under 100 Kg/cm$^2$ (actual pressure). The press-moulded product was post-cured at 250°C. for 30 minutes. The physical properties of the moulded product were determined to obtain results shown in Table 8.

Method (F) of Preparation of Resin Compositions

A mixture comprising 100 g of the novolak type substituted phenolic resin shown in Table 8, 63 g of a bisphenol A type epoxy resin (EPOMIK R—140 manufactured and supplied by Mitsui Petrochemical-Epoxy Co.) and 1 g of a $BF_3$-2-methylimidazole complex was kneaded and press-moulded in a mould maintained at 200°C. under 100 Kg/cm$^2$ (actual pressure) for 20 minutes. The press-moulded composition was post-cured at 200°C. for 5 hours and reacted at 250°C. for 0.5 hour to form a cured moulded product having physical properties shown in Table 8.

Method (G) of Preparation of Resin Compositions

A mixture comprising 40 g of the novolak substituted phenolic resin shown in Table 8, 60 g of the novolak phenol-formaldehyde resin obtained in Comparative Example 2 (in Comparative Example 11 the novolak substituted phenolic resin was not used, but 100 g of the novolak phenol/aldehyde resin obtained in Comparative Example 2 was used), 10 g of hexamine as a curing agent, 67 g of wood flour as a filler and 1 g of stearic acid bisamide as an additive was sufficiently pulverised and blended and kneaded at 90 to 100°C. for 18 minutes to form a sheet. The sheet was pulverised and blended to form a moulding material. The moulding material was moulded at 165°C. under 300 Kg/cm$^2$ for 5 minutes to obtain a moulded product having physical properties shown in Table 8.

Method (H) of Preparation of Resin Compositions

A moulding material composition was prepared by blending 70 g of the novolak substituted phenolic resin shown in Table 8, 30 g of a solid resol phenol-formaldehyde resin prepared in Referential Example 24 illustrated hereinafter, 67 g of wood flour as a filler and 1 g of stearic acid bisamide as an additive. The composition was sufficiently pulverised and blended and roll-kneaded at 120°C. for 15 minutes. The obtained sheet was pulverised and blended, and the resulting moulding material was moulded at 180°C. under 300 Kg/cm$^2$ for 5 minutes to obtain a moulded product having physical properties shown in Table 8.

Referential Example 24

A reaction vessel was charged with 100 g (1.1 moles) of phenol, 90 g (1.1 moles as HCHO) of 37% formalin and 0.5 g of 25% aqueous ammonia. Reaction was carried out under reflux at 90 to 100°C. for 1.5 hours. The temperature was lowered to room temperature. The water layer that had separated was removed. The precondensate emulsion obtained was heated again at 90 to 110°C. and water was removed under reduced pressure. When the temperature of the reaction product was 110°C., the reaction product was taken out from the reaction vessel and cooled and solidified to obtain 100 g of a resin. From the results obtained according to the vapour pressure osmotic method and gel permeation chromatography, it was found that the resin obtained had a number average molecular weight $\bar{M}n$ of 440, a weight average molecular weight $\bar{M}w$ of 740 and a molecular weight distribution $\bar{M}w/\bar{M}n$ of 1.69. The melting point of the resin was 105°C. as determined according to the microscope method.

A high-molecular-weight novolak resin and a process for its production are described and claimed in EPC Application No. 80304746.3 filed on even date herewith and published as EP—A2—0032062 on 15 July 1981.

TABLE 8

| Example No. | Novolak Substituted Phenolic Resin: Preparation Example No. | Kind | $\overline{Mn}$ | Kind | Setting Resin: Curing Promotor | Curing Agent |
|---|---|---|---|---|---|---|
| 1 | Referential Example 1 | high-molecular-weight novolak p-cresol/formaldehyde resin | 5550 | epoxy resin | $BF_3$ .2-methyl-imidazole complex | – |
| Comparative Example 1 | Starting Material of Referential Example 1 | novolak p-cresol/formaldehyde resin | 510 | ditto | ditto | – |
| 2 | Referential Example 1 | high-molecular-weight novolak p-cresol/formaldehyde resin | 5550 | ditto | ditto | – |
| 3 | Referential Example 2 | high-molecular-weight novolak o-cresol/formaldehyde resin | 1930 | ditto | ditto | – |
| 4 | Referential Example 3 | high-molecular-weight novolak p-tert-butylphenol/formaldehyde resin | 2510 | ditto | ditto | – |
| 5 | Referential Example 4 | high-molecular-weight novolak p-chlorophenyl/formaldehyde resin | 2100 | ditto | ditto | – |
| 6 | Referential Example 5 | high-molecular-weight novolak m-cresol/p-cresol/formaldehyde resin | 2190 | ditto | ditto | – |
| Comparative Example 2 | Starting Material of Referential Example 1 | novolak type p-cresol/formaldehyde resin | 510 | ditto | ditto | – |

TABLE 8 (Continued)

| Example No. | Filler | Setting Resin Preparation Method | Physical Properties: Flexural Strength (Kg/cm) | Flexural Elasticity [(Kg/cm$^2$) × $10^{-5}$] | Izod Impact Strength (Kg.cm/cm) | Rockwell Hardness (M) | Thermal Distortion Temperature (°C) |
|---|---|---|---|---|---|---|---|
| 1 | fused silica | A | 1290 | 1.90 | 1.7 | 111 | 288 |
| Comparative Example 1 | ditto | A | 890 | 1.97 | 1.5 | 105 | 101 |
| 2 | ditto | B | 1212 | 1.32 | 1.6 | 110 | >250 |
| 3 | ditto | B | 1215 | 1.24 | 1.7 | 112 | 172 |
| 4 | ditto | B | 1050 | 1.20 | 1.6 | 111 | 175 |
| 5 | ditto | B | 1420 | 1.43 | 1.6 | 113 | 195 |
| 6 | ditto | B | 1180 | 1.18 | 1.6 | 110 | >250 |
| Comparative Example 2 | ditto | B | 824 | 1.20 | 1.3 | 108 | 109 |

TABLE 8 (Continued)

| Example No. | Novolak Substituted Phenolic Resin | | | Setting Resin | | |
|---|---|---|---|---|---|---|
| | Preparation Example No. | Kind | $\overline{Mn}$ | Kind | Curing Promotor | Curing Agent |
| Comparative Example 3 | Starting Material of Referential Example 2 | novolak o-cresol/ formaldehyde resin | 550 | epoxy resin | $BF_3$.2-methyl-imidazole complex | — |
| Comparative Example 4 | Starting Material of Referential Example 3 | novolak p-tert-butylphenol/ formaldehyde resin | 450 | ditto | ditto | — |
| Comparative Example 5 | Starting Material of Referential Example 4 | novolak p-chlorophenol/ formaldehyde resin | 430 | ditto | ditto | — |
| Comparative Example 6 | Starting Material of Referential Example 5 | novolak m-cresol/p-cresol/ formaldehyde coply-condensed resin | 380 | ditto | ditto | — |
| Comparative Example 7 | Referential Example 7 | novolak phenol/ formaldehyde resin | 1090 | ditto | ditto | — |
| 7 | Referential Example 1 | high-molecular-weight novolak p-cresol/ formaldehyde resin | 5550 | ditto | ditto | — |
| 8 | ditto | ditto | 5550 | ditto | 2-methyl-imidazole | — |
| Comparative Example 8 | Starting Material of Referential Example 1 | novolak p-cresol/ formaldehyde resin | 510 | ditto | ditto | — |

TABLE 8 (Continued)

| Example No. | Filler | Setting Resin Preparation Method | Physical Properties: Flexural Strength (Kg/cm) | Flexural Elasticity [(Kg/cm$^2$) × $10^{-5}$] | Izod Impact Strength (Kg.cm/cm) | Rockwell Hardness (M) | Thermal Distortion Temperature (°C) |
|---|---|---|---|---|---|---|---|
| Comparative Example 3 | fused silica | B | 646 | 1.06 | 1.5 | 109 | 98 |
| Comparative Example 4 | ditto | B | 520 | 0.93 | 1.0 | 108 | 101 |
| Comparative Example 5 | ditto | B | 699 | 1.17 | 1.5 | 109 | 107 |
| Comparative Example 6 | ditto | B | 756 | 1.10 | 1.2 | 107 | 102 |
| Comparative Example 7 | ditto | B | 630 | 1.10 | 1.3 | 107 | 95 |
| 7 | ditto | D | 792(23°C)<br>616(200°C) | 1.20(23°C)<br>0.76(200°C) | 1.9 | 116 | >250 |
| 8 | glass cloth | C | 3700(21°C)<br>2900(150°C)<br>2200(180°C) | – | – | – | – |
| Comparative Example 8 | ditto | C | 4400(21°C)<br>1700(150°C)<br>900(180°C) | – | – | – | – |

TABLE 8 (Continued)

| Example No. | Novolak Substituted Phenolic Resin: Preparation Example No. | Kind | $\overline{Mn}$ | Setting Resin: Kind | Curing Promotor | Curing Agent |
|---|---|---|---|---|---|---|
| 9 | Referential Example 1 | high-molecular-weight novolak p-cresol/ formaldehyde resin | 5550 | epoxy resin | $BF_3$.2-methyl-imidazole complex | – |
| 10 | ditto | ditto | 5550 | ditto | ditto | – |
| 11 | ditto | ditto | 5550 | ditto | ditto | – |
| 12 | ditto | ditto | 5550 | ditto | ditto | – |
| Comparative Example 9 | Starting Material of Referential Example 1 | novolak p-cresol/ formaldehyde resin | 510 | ditto | ditto | – |
| Comparative Example 10 | Referential Example 7 | novolak phenol/ formaldehyde resin | 1090 | ditto | ditto | – |
| 13 | Referential Example 1 | high-molecular-weight novolak p-cresol/ formaldehyde resin | 5550 | novolak/phenol/ formaldehyde resin | – | hexamine |
| 14 | Referential Example 4 | high-molecular-weight novolak p-chlorophenol/ formaldehyde resin | 2100 | ditto | – | ditto |
| Comparative Example 11 | Referential Example 7 | novolak phenol/ formaldehyde resin | 1090 | ditto | – | ditto |
| 15 | Referential Example 1 | high-molecular-weight novolak p-cresol/ formaldehyde resin | 5550 | resol phenol/ formaldehyde resin | – | – |

TABLE 8 (Continued)

| Example No. | Filler | Setting Resin Preparation Method | Physical Properties: Flexural Strength (Kg/cm) | Flexural Elasticity [(Kg/cm$^2$) × $10^{-5}$] | Izod Impact Strength (Kg.cm/cm) | Rockwell Hardness (M) | Thermal Distortion Temperature (°C) |
|---|---|---|---|---|---|---|---|
| 9 | glass fiber | E | 1120 | 0.90 | 10.0 | 110 | >250 |
| 10 | asbestos | E | 720 | 0.70 | 3.0 | 110 | >250 |
| 11 | graphite | E | 640 | 0.60 | 1.6 | 110 | >250 |
| 12 | not added | F | 850 | 0.35 | 2.1 | – | 185 |
| Comparative Example 9 | ditto | F | 550 | 0.30 | 1.4 | – | 90 |
| Comparative Example 10 | ditto | F | 580 | 0.31 | 1.7 | – | 90 |
| 13 | wood flour | G | 1080 | – | 2.7 | – | 210 |
| 14 | ditto | G | 1010 | – | 2.6 | – | 200 |
| Comparative Example 11 | ditto | G | 820 | – | 2.6 | – | 160 |
| 15 | ditto | H | 1050 | – | 2.8 | – | 212 |

TABLE 8 (Continued)

| Example No. | Novolak Substituted Phenolic Resin: Preparation Example No. | Novolak Substituted Phenolic Resin: Kind | $\overline{Mn}$ | Setting Resin: Kind | Setting Resin: Curing Promotor | Setting Resin: Curing Agent |
|---|---|---|---|---|---|---|
| 16 | Referential Example 4 | high-molecular-weight novolak p-chlorophenol/ formaldehyde resin | 2100 | resol phenol/ formaldehyde resin | – | – |
| Comparative Example 12 | Referential Example 7 | novolak phenol/ formaldehyde resin | 1090 | ditto | – | – |
| 17 | Referential Example 10 | high-molecular-weight novolak p-cresol/ formaldehyde resin | 2000 | epoxy resin | $BF_3$·2-methyl-imidazole complex | – |
| 18 | ditto | ditto | 2000 | ditto | ditto | – |
| 19 | Referential Example 11 | ditto | 2000 | ditto | ditto | – |
| 20 | Referential Example 12 | ditto | 2050 | ditto | ditto | – |
| 21 | Referential Example 13 | ditto | 2370 | ditto | ditto | – |
| 22 | Referential Example 14 | ditto | 2100 | ditto | ditto | – |
| 23 | Referential Example 15 | ditto | 2400 | ditto | ditto | – |
| 24 | Referential Example 16 | ditto | 2100 | ditto | ditto | – |
| 25 | Referential Example 17 | ditto | 2050 | ditto | ditto | – |
| 26 | Referential Example 18 | ditto | 2200 | ditto | ditto | – |

TABLE 8 (Continued)

| Example No. | Filler | Setting Resin Preparation Method | Physical Properties: Flexural Strength (Kg/cm) | Flexural Elasticity [(Kg/cm$^2$) × $10^{-5}$] | Izod Impact Strength (Kg.cm/cm) | Rockwell Hardness (M) | Thermal Distortion Temperature (°C) |
|---|---|---|---|---|---|---|---|
| 16 | wood flour | H | 1040 | — | 2.6 | — | 158 |
| Comparative Example 12 | ditto | H | 800 | — | 2.6 | — | 158 |
| 17 | fused silica | A | 1180 | 1.90 | 1.7 | 110 | 280 |
| 18 | ditto | B | 1090 | 1.21 | 1.6 | 110 | >250 |
| 19 | ditto | B | 1050 | 1.80 | 1.8 | 102 | 240 |
| 20 | ditto | B | 1100 | 1.80 | 1.8 | 110 | >250 |
| 21 | ditto | B | 1180 | 1.90 | 1.7 | 110 | 288 |
| 22 | ditto | B | 1120 | 1.80 | 1.8 | 106 | 260 |
| 23 | ditto | B | 1210 | 2.00 | 1.7 | 112 | 286 |
| 24 | ditto | B | 1160 | 1.80 | 1.8 | 108 | 270 |
| 25 | ditto | B | 1200 | 2.00 | 1.6 | 111 | 284 |
| 26 | ditto | B | 1090 | 1.80 | 1.8 | 105 | 250 |

TABLE 8 (Continued)

| Example No. | Novolak Substituted Phenolic Resin: Preparation Example No. | Novolak Substituted Phenolic Resin: Kind | $\overline{Mn}$ | Setting Resin: Kind | Setting Resin: Curing Promotor | Setting Resin: Curing Agent |
|---|---|---|---|---|---|---|
| 27 | Referential Example 19 | high-molecular-weight novolak o-cresol/ formaldehyde resin | 1900 | epoxy resin | $BF_3$·2-methyl-imidazole complex | — |
| 28 | Referential Example 20 | high-molecular-weight novolak p-tert-butylphenol/ formaldehyde resin | 2020 | ditto | ditto | — |
| 29 | Referential Example 21 | high-molecular-weight novolak p-chlorophenol/ formaldehyde resin | 2000 | ditto | ditto | — |
| 30 | Referential Example 22 | high-molecular-weight novolak m-cresol/p-cresol/ formaldehyde copoly-condensed resin | 2010 | ditto | ditto | — |
| 31 | Referential Example 10 | high-molecular-weight novolak p-cresol/ formaldehyde resin | 2000 | ditto | ditto | — |
| 32 | ditto | ditto | 2000 | ditto | ditto | — |
| 33 | ditto | ditto | 2000 | ditto | ditto | — |
| 34 | ditto | ditto | 2000 | ditto | ditto | — |
| 35 | ditto | ditto | 2000 | novolak phenol/ formaldehyde resin | — | hexamine |

TABLE 8 (Continued)

| Example No. | Filler | Setting Resin Preparation Method | Physical Properties | | | | |
|---|---|---|---|---|---|---|---|
| | | | Flexural Strength (Kg/cm) | Flexural Elasticity [(Kg/cm$^2$) $\times 10^{-5}$] | Izod Impact Strength (Kg.cm/cm) | Rockwell Hardness (M) | Thermal Distortion Temperature (°C) |
| 27 | fused silica | B | 1090 | 1.20 | 1.7 | 112 | 168 |
| 28 | ditto | B | 950 | 1.05 | 1.6 | 111 | 170 |
| 29 | ditto | B | 1110 | 1.25 | 1.6 | 113 | 180 |
| 30 | ditto | B | 1050 | 1.13 | 1.6 | 110 | >250 |
| 31 | glass fiber | E | 830 | 0.80 | 11.0 | 108 | >250 |
| 32 | asbestos | F | 700 | 0.70 | 3.5 | 107 | >250 |
| 33 | graphite | E | 620 | 0.60 | 2.0 | 107 | >250 |
| 34 | not added | F | 830 | 0.33 | 2.1 | – | 182 |
| 35 | wood flour | G | 1060 | – | 2.9 | – | 206 |

TABLE 8 (Continued)

| Example No. | Novolak Substituted Phenolic Resin | | | Setting Resin | | |
|---|---|---|---|---|---|---|
| | Preparation Example No. | Kind | $\overline{Mn}$ | Kind | Curing Promotor | Curing Agent |
| 36 | Referential Example 21 | high-molecular-weight novolak p-chlorophenol/ formaldehyde resin | 2000 | novolak phenol/ formaldehyde resin | – | hexamine |
| 37 | Referential Example 10 | high-molecular-weight novolak p-cresol/ formaldehyde resin | 2000 | resol phenol/ formaldehyde resin | – | – |
| 38 | Referential Example 21 | high-molecular-weight novolak p-chlorophenol/ formaldehyde resin | 2000 | ditto | – | – |

TABLE 8 (Continued)

| Example No. | Filler | Setting Resin Preparation Method | Physical Properties: Flexural Strength (Kg/cm) | Flexural Elasticity [($Kg/cm^2$) $\times 10^{-5}$] | Izod Impact Strength (Kg.cm/cm) | Rockwell Hardness (M) | Thermal Distortion Temperature (°C) |
|---|---|---|---|---|---|---|---|
| 36 | wood flour | G | 1010 | – | 2.8 | – | 200 |
| 37 | ditto | H | 1030 | – | 2.6 | – | 210 |
| 38 | ditto | H | 1040 | – | 2.8 | – | 210 |

**Claims**

1. A resin composition comprising (A) a setting resin and (B) a novolak phenolic resin, characterised in that the composition contains from 10 to 200 parts by weight, per 100 parts by weight of resin (A), of a substantially linear, high-molecular-weight novolak substituted phenolic resin (B) which is derived from a phenol component mainly composed of at least one bifunctional phenol and which has a number average molecular weight of at least 1500.

2. A resin composition according to Claim 1 characterised in that said high-molecular-weight novolak substituted phenolic resin (B) comprises substantially linear novolak recurring units formed by condensation of a phenol component comprising at least 70 mole % of at least one bifunctional phenol represented by the general formula [I]:

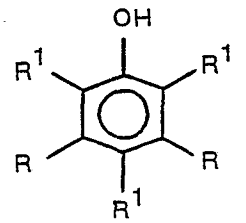

[I]

wherein two of the three $R^1$'s are hydrogen atoms and the remaining $R^1$ is an alkyl group having 1 to 8 carbon atoms, an aryl group having 6 to 10 carbon atoms, a halogen atom or a hydroxyl group, and the two R's, which may be the same or different, stand for a hydrogen atom, an alkyl group having 1 to 8 carbon atoms, a halogen atom or a hydroxyl group, with at least one aldehyde represented by the general formula [II]:

$$R^2—CHO \qquad [II]$$

wherein $R^2$ stands for a hydrogen atom, a methyl group or a halogenated methyl group.

3. A resin composition according to claim 2, characterised in that said high-molecular weight novolak substituted phenolic resin (B) has a polymer chain represented substantially by the formula [VII]:

$$Z—(Y_p—Z)_n—Y_p—Z \qquad [VII]$$

wherein Z stands for a block of said substantially linear novolak recurring units, Y stands for an intervening group consisting of a divalent hydrocarbon group, p is 0 or 1, and n is zero or a number of at least 1.

4. A resin composition according to claim 3, characterised in that in said general formula [VII], p is 1 and the intervening group Y is an alkylidene group having 1 to 4 carbon atoms, an alkylene group having 2 to 5 carbon atoms, an arylalkylidene group having 7 to 9 carbon atoms, an arylalkylene group having 8 to 10 carbon atoms or an arylene-bis-alkylene group having 8 to 10 carbon atoms.

5. A resin composition according to any of one of the preceding claims characterised in that said high-molecular-weight novolak substituted phenolic resin (B) contains intervening groups consisting of a divalent hydrocarbon group between blocks of said novolak recurring units having a number average molecular weight of 250 to 1200 such that said intervening groups and said blocks alternate, said intervening groups being present in an amount of 0.5 to 1 mole per mole of said blocks.

6. A resin composition according to any one of the preceding claims, characterised in that said high-molecular-weight novolak substituted phenolic resin (B) has a number average molecular weight of from 1700 to 15000.

7. A resin composition according to claim 6, characterised in that said number average molecular weight is from 2000 to 10000.

8. A resin composition according to any one of the preceding claims, characterised in that the molecular weight distribution $\overline{M}w/\overline{M}n$ of said high-molecular-weight novolak substituted phenolic resin (B), expressed as the ratio of the weight average molecular weight $\overline{M}w$ to the number average molecular weight $\overline{M}n$, is from 1.8 to 20.

9. A resin composition according to any one of the preceding claims, characterised in that the phenol component of said high-molecular-weight novolak substituted phenolic resin (B) comprises up to 30 mole % of a trifunctional phenol.

10. A resin composition according to claim 9, characterised in that the phenol component of said high-molecular-weight novolak substituted phenolic resin (B) comprises 80 to 100 mole% of a bifunctional phenol and up to 20 mole % of a trifunctional phenol, with the proviso that the total amount of both the phenols is 100 mole%.

11. A resin composition according to claim 10, characterised in that the phenol component of said high-molecular-weight novolak substituted phenolic resin (B) comprises 90 to 100 mole % of a bifunctional phenol and up to 10 mole % of a trifunctional phenol.

12. A resin composition according to any one of the preceding claims, characterised in that the high-molecular-weight novolak substituted phenolic resin (B) is present in an amount of 30 to 150 parts by weight per 100 parts by weight of the setting resin (A).

13. A resin composition according to any one of the preceding claims, characterised in that the setting resin (A) is a resin capable of being cured by a compound containing a phenolic hydroxyl group, and the high-molecular-weight novolak substituted phenolic resin (B) is capable of acting as a curing agent for said resin (A).

14. A resin composition according to any one of the preceding claims, characterised in that the setting resin (A) is an epoxy resin.

15. A resin composition according to any one of claim 1 to 12, characterised in that the setting resin (A) is a resol phenolic resin or other novolak phenolic resin.

16. A resin composition according to any one of the preceding claims, characterised in that the composition contains from 10 to 250 parts by weight of inorganic filler per 100 parts by weight of the setting resin (A).

17. A product which has been formed by moulding and curing a resin composition as claimed in any one of the preceding claims.

**Patentansprüche**

1. Harz-Zusammensetzung, enthaltend (A) ein Abbindeharz und (B) ein Novolak-Phenolharz, dadurch gekennzeichnet, daß die Zusammensetzung auf 100 Gewichtsteile des Harzes (A) 10 bis 200 Gewichtsteile eines weitgehend linearen substituierten Novolak-Phenolharzes mit hohem Molekulargewicht (B) enthält, welches von einer Phenolkomponente abgeleitet ist, die hauptsächlich aus zumindest einem bifunktionellen Phenol aufgebaut ist, und welches ein Zahlenmittel des Molekulargewichts von mindestens 1500 aufweist.

2. Harz-Zusammensetzung nach Anspruch 1, dadurch gekennzeichnet, daß das substituierte Novolak-Phenolharz mit hohem Molekulargewicht (B) im wesentlichen lineare wiederkehrende Novolak-Einheiten umfaßt, die durch Kondensation einer Phenolkomponente, welche mindestens 70 Mol-% von mindestens einem bifunktionellen Phenol enthält, welches durch die allgemeine Formel (I) angegeben ist,

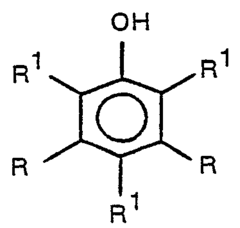

[I]

worin zwei der drei Reste $R^1$ Wasserstoffatome sind und der verbleibende Rest $R^1$ einen Alkylrest mit 1 bis 8 Kohlenstoffatomen, ein Arylrest mit 6 bis 10 Kohlenstoffatomen, ein Halogenatom oder eine Hydroxylgruppe darstellt, und die beiden Reste R, die gleich oder unterschiedlich sein können, für, ein Wasserstoffatom, einen Alkylrest mit 1 bis 8 Kohlenstoffatomen, ein Halogenatom oder eine Hydroxylgruppe stehen, mit mindestens einem Aldehyd der allgemeinen Formel (II)

$$R^2\text{—CHO} \quad \text{(II)}$$

worin $R^2$ für ein Wasserstoffatom, eine Methylgruppe oder eine halogenierte Methylgruppe steht, gebildet werden.

3. Harz-Zusammensetzung nach Anspruch 2, dadurch gekennzeichnet, daß das substituierte Novolak-Phenolharz von hohem Molekulargewicht (B) eine Polymerkette besitzt, die im wesentlichen durch die Formel (VII)

$$Z\text{-}(Y_p - Z)_n Y_p - Z \quad \text{(VII)}$$

angegeben ist, worin Z für einen Block der weitgehend linearen wiederkehrenden Novolak-Einheiten steht, Y für eine dazwischen-tretende Gruppe steht, die aus einer divalenten Kohlenwasserstoffgruppe besteht, p den Wert 0 oder 1 besitzt und n für 0 oder eine Zahl von mindestens 1 steht.

4. Harz-Zusammensetzung nach Anspruch 3, dadurch gekennzeichnet, daß in der allgemeinen Formel (VII) p gleich 1 ist und die dazwischen-tretende Gruppe Y ein Alkylidenrest mit 1 bis 4 Kohlenstoffatomen, ein Alkylenrest mit 2 bis 5 Kohlenstoffatomen, ein Arylalkylidenrest mit 7 bis 9 Kohlenstoffatomen, ein Arylalkylenrest mit 8 bis 10 Kohlenstoffatomen oder ein Arylen-bis-alkylenrest mit 8 bis 10 Kohlenstoffatomen ist.

5. Harz-Zusammensetzung nach einem der voranstehenden Ansprüche, dadurch gekennzeichnet,

daß das substituierte Novolak-Phenolharz mit hohem Molekulargewicht (B) dazwischen-tretende Gruppen enthält, die aus einer divalenten Kohlenwasserstoffgruppe zwischen Blökken der wiederkehrenden Novolak-Einheiten mit einem Zahlenmittel des Molekulargewichts von 250 bis 1200 bestehen, so daß die dazwischen-tretenden Gruppen und die Blöcke alternieren, wobei die dazwischentretenden Gruppen in einer Menge von 0,5 bis 1 Mol pro Mol der Blöcke vorhanden sind.

6. Harz-Zusammensetzung nach einem der voranstehenden Ansprüche, dadurch gekennzeichnet, daß das substituierte Novolak-Phenolharz mit hohem Molekulargewicht (B) ein Zahlenmittel des Molekulargewichts von 1700 bis 1500 aufweist.

7. Harz-Zusammensetzung nach Anspruch 6, dadurch gekennzeichnet, daß das Zahlenmittel des Molekulargewichts von 2000 bis 10000 beträgt.

8. Harz-Zusammensetzung nach einem der voranstehenden Ansprüche, dadurch gekennzeichnet, daß die Molekulargewichtsverteilung $\overline{M}w/\overline{M}n$ des substituierten Novolak-Phenolharzes mit hohem Molekulargewicht (B), ausgedrückt als das Verhältnis des Gewichtsmittels des Molekulargewichts $\overline{M}w$ zum Zahlenmittel des Molekulargewichts $\overline{M}n$ von 1,8 bis 20 beträgt.

9. Harz-Zusammensetzung nach einem der voranstehenden Ansprüche, dadurch gekennzeichnet, daß die Phenolkomponente des substituierten Novolak-Phenolharzes mit hohem Molekulargewicht (B) bis zu 30 Mol-% eines trifunktionellen Phenols enthält.

10. Harz-Zusammensetzung nach Anspruch 9, dadurch gekennzeichnet, daß die Phenolkomponente des substituierten Novolak-Phenolharzes mit hohem Molekulargewicht (B) 80 bis 100 Mol-% eines bifunktionellen Phenols und bis zu 20 Mol-% eines trifunktionellen Phenols enthält, mit der Maßgabe, daß die gesamte Menge der beiden Phenole 100 Mol-% beträgt.

11. Harz-Zusammensetzung nach Anspruch 10, dadurch gekennzeichnet, daß die Phenolkomponente des substituierten Novolak-Phenolharzes mit hohem Molekulargewicht (B) 90 bis 100 Mol-% eines bifunktionellen Phenols und bis zu 10 Mol-% eines trifunktionellen Phenols enthält.

12. Harz-Zusammensetzung nach einem der voranstehenden Ansprüche, dadurch gekennzeichnet, daß das substituierte Novolak-Phenolharz mit hohem Molekulargewicht (B) in einer Menge von 30 bis 150 Gewichtsteilen pro 100 Gewichtsteilen des Abbindeharzes (A) vorhanden ist.

13. Harz-Zusammensetzung nach einem der voranstehenden Ansprüche, dadurch gekennzeichnet, daß das Abbindeharz (A) ein Harz ist, welches in der Lage ist, durch eine Verbindung, die eine phenolische Hydroxylgruppe enthält, gehärtet zu werden, und das substituierte Novolak-Phenolharz mit hohem Molekulargewicht (B) in der Lage ist, als ein Härtemittel für das Harz (A) zu wirken.

14. Harz-Zusammensetzung nach einem der voranstehenden Ansprüche, dadurch gekennzeichnet, daß das Abbindeharz (A) ein Epoxyharz ist.

15. Harz-Zusammensetzung nach einem der Ansprüche 1 bis 12, dadurch gekennzeichnet, daß das Abbindeharz (A) ein Resol-Phenolharz oder ein anderes Novolak-Phenolharz ist.

16. Harz-Zusammensetzung nach einem der voranstehenden Ansprüche, dadurch gekennzeichnet, daß die Zusammensetzung 10 bis 250 Gewichtsteile eines anorganischen Füllstoffes pro 100 Gewichtsteilen des Abbindeharzes (A) enthält.

14. Produkt, welches durch Formen und Härten einer Harz-Zusammensetzung nach einem der voranstehenden Ansprüche gebildet worden ist.

**Revendications**

1. Composition de résine constituée (A) d'une résine durcissable et (B) d'une résine phénolique novolaque, caractérisée par le fait que la composition contient de 10 à 200 parties en poids, pour 100 parties en poids de résine (A), d'une résine phénolique substituée de type novolaque (B) pratiquement linéaire, de haut poids moléculaire qui est dérivée d'un constituant phénol comprenant essentiellement au moins un phénol bifonctionnel et présentant un poids moléculaire moyen en nombre d'au moins 1500.

2. Composition de résine selon la revendication 1, caractérisée par le fait que ladite résine phénolique substituée de type novolaque (B) de haut poids moléculaire est pratiquement constituée d'unités récurrentes linéaires de type novolaque formées par condensation d'un constituant phénol comprenant au moins 70 mole % d'au moins un phénol bifonctionnel représenté par la formule générale suivante:

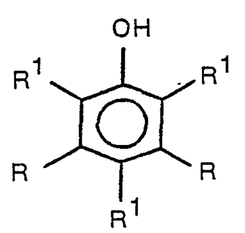

[I]

dans laquelle deux des trois radicaux $R^1$ sont des atomes d'hydrogène et le radical $R^1$ restant étant un groupe alkyle ayant de 1 à 8 atomes de carbone, un groupe aryle ayant de 6 à 10 atomes de carbone,

un atome d'halogène ou un groupe hydroxyle, et les deux radicaux R, qui peuvent être identiques ou différents, représentent un atome d'hydrogène, un groupe alkyle ayant de 1 à 8 atomes de carbone, un atome d'halogène ou un groupe hydroxyle, avec au moins un aldéhyde représenté par la formule générale suivante:

$$R^2—CHO \qquad (II)$$

dans laquelle $R^2$ représente un atome d'hydrogène, un groupe méthyle ou un groupe méthyle halogéné.

3. Composition de résine selon la revendication 2, caractérisé par le fait que ladite résine phénolique substituée de type novolaque (B) de haut poids moléculaire a une chaîne polymérique représentée pratiquement par la formule suivante:

$$Z\!-\!(Y_p - Z)_{\overline{n}}Y_p - Z \qquad (VII)$$

dans laquelle Z représente une séquence desdites unités recurrentes pratiquement linéaires de type novolaque, Y représente un groupe intermédiaire consistant en un groupe hydrocarboné divalent, p est 0 ou 1, et n est 0 ou un nombre d'au moins 1.

4. Composition de résine selon la revendication 3, caractérisé par le fait que dans ladite formule générale (VII), p est 1 et le groupe intermédiaire Y est un groupe alkylidène ayant de 1 à 4 atomes de carbone, un groupe alkylène ayant de 2 à 5 atomes de carbone, un groupe arylalkylidène ayant de 7 à 9 atomes de carbone, un groupe aryalkylène ayant de 8 à 10 atomes de carbone ou un groupe arylène-bis-alkylène ayant de 8 à 10 atomes de carbone.

5. Composition de résine selon l'une quelconque des revendications précédentes caractérisé par le fait que ladite résine phénolique substituée de type novolaque (B) de haut poids moléculaire contient des groupes intermédiaires constitué d'un groupe hydrocarboné divalent entre les séquences desdites unités récurrentes de type novolaque ayant un poids moléculaire moyen en nombre de 250 à 1200 de sorte que les groupes intermédiaires et lesdites séquences alternent, lesdits groupes intermédiaires étant présent en une proportion de 0,5 à 1 mole par mole desdites séquences.

6. Composition de résine selon l'une quelconque des revendications précédentes caractérisée par le fait que la résine phénolique substituée de type novolaque (B) de haut poids moléculaire a un poids moléculaire moyen en nombre de 1700 à 15000.

7. Composition de résine selon la revendication 6 caractérisé par le fait que le poids moléculaire moyen en nombre est de 2000 à 10.000.

8. Composition de résine selon l'une quelconque des revendications précédentes caractérisée par le fait que la répartition du poids moléculaire $\overline{Mw}/\overline{Mn}$ de ladite résine phénolique substituée de type novolaque (B) de haut poids moléculaire, exprimée sous forme du rapport du poids moléculaire moyen ($\overline{Mw}$) au poids moléculaire moyen en nombre ($\overline{Mn}$), est de 1,8 à 20.

9. Composition de résine selon une quelconque des revendications précédentes caractérisée par le fait que le constituant phénol de ladite résine phénolique substituée de type novolaque (B) de haut poids moléculaire comprend jusqu'à 30 mole % d'un phénol trifonctionnel.

10. Composition de résine selon la revendication 9 caractérisée par le fait que le constituant phénol de ladite résine phénolique substituée de type novolaque (B) de haut poids moléculaire comprend de 80 à 100 mole % d'un phénol bifonctionnel et jusqu'à 20 mole % d'un phénol trifonctionnel, sous réserve que la quantité totale des deux phénols soit de 100 mole %.

11. Composition de résine selon la revendication 10 caractérisée par le fait que le constituant phénol de ladite résine phénolique substituée de type novolaque (B) de haut poids moléculaire comprend de 90 à 100 mole % d'un phénol bifonctionnel et jusqu'à 10 mole % d'un phénol trifonctionnel.

12. Composition de résine selon l'une quelconque des revendications précédentes, caractérisée par le fait que la résine phénolique substituée de type novolaque (B) de poids moléculaire est présente en une quantité de 30 à 150 parties en poids pour 100 parties en poids de la résine durcissable (A).

13. Composition de résine selon une quelconque des revendications précédentes, caractérisée par le fait que la résine durcissable (A) est une résine susceptible d'être durcie par un composé contenant un groupe hydroxy-phénolique et que la résine phénolique substituée de type novolaque (B), de haut poids moléculaire est susceptible d'agir comme agent de durcissement de ladite résine (A).

14. Composition de résine selon une quelconque des revendications précédentes caractérisée par le fait que la résine durcissable (A) est une résine époxyde.

15. Composition de résine selon une quelconque des revendications 1 à 12 caractérisée par le fait que la résine durcissable (A) est une résine résol-phénolique ou une autre résine phénolique de type novolaque.

16. Composition de résine selon une quelconque des revendications précédentes caractérisée par le fait que la composition contient de 10 à 250 parties en poids d'une charge inorganique pour 100 parties en poids de la résine durcissable (A).

17. Produit caractérisé par le fait qu'il est formé par moulage et durcissement d'une composition de résine telle que revendiquée selon l'une quelconque des revendications précédentes.